# EUROPEAN PATENT APPLICATION

(11) **EP 1 533 729 A1**
(43) Date of publication of application: **25.05.2005**
(21) Application number: 03733053.7
(22) Date of filing: 23.05.2003
(51) Int. Cl.: G06F 17/60

(54) **DISPLAY DEVICE LEASE MANAGEMENT SYSTEM**

(30) Priority: 31.05.2002 JP 2002160750
(71) Applicant: Kabushiki Kaisha Toshiba, Tokyo 105-8001 (JP)
(72) Inventor: TOKITA, Kiyoshi, Asahikawa-shi, Hokkaido 070-0043 (JP); ANDO, Shigeru, Kamakura-shi, Kanagawa 247-0062 (JP)
(74) Representative: HOFFMANN - EITLE
(86) International application number: PCT/JP2003/006497
(87) International publication number: WO 2003/102834

(57) **Abstract**

A contents data base accumulating contents to be displayed on a display device and a lease management section managing a lease of the display device and a distribution of the contents to the display device are connected to the display device so that they can communicate with each other. The lease management section manages the lease of the display device and the distribution of the contents to the display device, and therefore, it is possible to manage both the lease of the display device and the provision of the contents to the display device effectively.

## Description

### Technical Field

The present invention relates to a display device lease management system, a display device lease management method, and a display device lease management server, which manage a lease of a display device.

### Background Art

There is a case when an equipment or the like is leased based on a lease contract, and the management thereof is performed. The lease contract is a contract to transfer a right of use of the equipment being an object of the lease for a certain period of time, and therefore, a user can obtain and make use of the equipment without purchasing the equipment.

In such a case, a lease management system is used to manage a lease status of the equipment (for example, refer to Japanese Patent Laid-open Application No. 2001-357325).

Here, it is conceivable that such a lease management system is also used when a display device is leased as the equipment.

### Disclosure of the Invention

In a display device, there is a case when not only the display device itself is leased but also a displaying contents (contents) displayed on the display device is provided. In such a case, it has been difficult to manage both the lease of the display device and the provision of the contents effectively, because in a conventional lease management system, only the lease of an equipment is mainly considered.

The present invention was made to solve such a problem, and the object thereof is to provide a display device lease management system, a display device lease management method, and a display device lease management server which can perform managements of both the lease of the display device and the provision of the contents to be displayed on the display device efficiently.

A. In order to achieve the object stated above, a display device lease management system according to the present invention includes: a display device having a display section to display images, and being an object of lease being capable to communicate with externals; and a lease management server having a contents data base accumulating contents to be displayed on the display section of the display device and a lease management section managing a lease of the display device and a distribution of the contents to the display device, and connected to the display device so that they can communicate with each other.

The contents data base accumulating the contents to be displayed on the display device and the lease management section managing the lease of the display device and the distribution of the contents to the display device, are connected to the display device so that they can communicate with each other. The lease management section manages the lease of the display device and the distribution of the contents to the display device, and therefore, it becomes possible to manage both the lease of the display device and the provision of the contents to the display device efficiently.

(1) The display device may further have: a request information input section to input request information for the display device or the contents; and a request information transmission section to transmit the request information inputted at the request information input section to the lease management server, and the lease management server may further have: a request information recording section to record the request information transmitted by the request information transmission section.

Request information for the display device or the contents can be inputted by using an input device of the display device, and then the transmission and the recording at the lease management server can be performed immediately. As a result, a request of a user for the display device or the contents can be reflected immediately.

1) As an example, this request information input section can be composed of a touch panel provided on the display section. A menu suitable for an input is displayed on the display device, and a selection from this menu is made by using the touch panel, and thereby the request information can be inputted easily.

2) The request information inputted at the request information input section is at least either contents specification information specifying the contents desired to be distributed from the lease management server or contents characteristic information representing a characteristic of the contents desired to be distributed, and the request information transmission section may transmit at least either the contents specification information or the contents characteristic information.

The lease management server may further have: a contents distribution section to distribute the contents accumulated on the contents data base to the display device based on the contents specification information transmitted from the display device. When the contents specification information is transmitted from the display device, the contents can be distributed to the display device by the contents distribution section.

The lease management server may further have: a list creating section creating a list of distributable contents to the display device, based on the contents characteristic information transmitted from the display device; and a list distribution section distributing the list created by the list creating section to the display device. When the contents characteristic information is transmitted from the display device, the list of the contents can be distributed to the display device by the list distribution section.

Here, the display device may further have: a selection information input section to input selection information selecting the contents desired to be distributed based on the list transmitted from the lease management server; and a selection information transmission section to transmit the selection information inputted at the selection information input section to the lease management server.

The user of the display device can select desired contents from the distributed contents by using the selection information input section, and transmit it to the lease management server.

Besides, the lease management server may further have: a contents distribution section to distribute the contents accumulated on the contents data base based on the contents selection information transmitted from the display device.

The selected contents are distributed, and then the user of the display device can view and listen to the contents.

(2) The display device may have a contents recording section to record the distributed contents from the contents data base. The distributed contents are recorded on the contents recording section, and therefore, the user of the display device can view and listen to the contents at a desired time.

1) The display device may have a contents erasing section to erase the contents recorded on the contents recording section. By erasing the contents, a storage capacity of the contents recording section can be utilized effectively. Besides, by restricting an audio-visual period and so on of the contents, the provision of the contents can be performed at a low price.

Here, the contents erasing section may erase the contents recorded on the contents recording section based on erasing condition information distributed with the contents. This erasing condition information is, for example, an erasing timing of the contents.

(3) The display device may further have: a corresponding information input section to input contents corresponding information corresponding to the contents; and a corresponding information transmission section to transmit the corresponding information inputted at the corresponding information input section to the lease management server. Information corresponding to the contents can be inputted and transmitted from the display device. As an example of "information corresponding to the contents", a golf swing and operational information on a game can be cited. Incidentally, it is permissible to perform this input from a plurality of display devices.

Here, the lease management server may further have: a corresponding information processing section to process the contents corresponding information transmitted from the display device; and a processed information transmission section to transmit processed information which is processed at the corresponding information processing section to the display device; and the display device may display the processed information transmitted from the lease management server. Information corresponding to the contents inputted from the display device is processed and displayed on the display device. For example, it is possible to display information to correct the golf swing, and to change the screen in accordance with operational information on the game. Incidentally, inputs from a plurality of display devices can be processed, and therefore, for example, a network game can be played.

(4) The lease management server may further have: a lease payment recording section in which a payment status of a leasing bill of the display device is recorded; a payment execution judgment section judging whether the payment of the leasing bill is executed or not based on the payment status of the leasing bill recorded on the lease payment recording section; and a charging information transmission section to transmit, to the display device, payment charging information to charge the payment when it is judged by the payment execution judgment section that the payment is not executed and the display device may display the payment charging information transmitted from the lease management server on the display section. When the payment of the lease is stacked up, it is possible to alert the user by using the leased display device. This leasing bill can be set variously, to be constant independent of an audio-visual time of the contents, to change in accordance with the distributed contents, or the like.

(5) As the providing contents, movies, paintings, landscapes, things, sports, games, and so on can be used. This game is a game making use of goods, and the goods may be provided to the participants of the game in accordance with results of the game. As an example, a golf game in which a prize thereof is a golf club can be cited.

(6) The display device may further have: a setting information recording section to record setting information representing a setting status of the display device; and a display device setting section to perform a setting of the display device based on the setting information recorded on the setting information recording section. The setting of the display device can be changed in accordance with the contents and so on.

1) The setting information recorded on the setting information recording section may be distributed together with the distribution of the contents. The distribution of the setting information is performed accompanying the distribution of the contents, and thereby the setting of the display device corresponding to the contents can be performed easily.

2) The setting information recorded on the setting information recording section may be audience restriction contents identification information to identify the contents of which the viewing and listening are to be restricted, and audience restriction releasing information to release the audience restriction of the contents represented by the audience restriction contents identification information. When some audience restriction is added to the distributed contents, the contents can be specified by using the audience restriction contents identification information, and thereby, the audience restriction thereof can be performed.

The audience restriction mentioned here means to set the display device, and thereby, a whole or a part of the contents are made unable to view and listen. As concrete examples of the audience restriction contents, movies classified as R-rating or X-rating by Administration Commission of Motion Picture Code of Ethics, can be cited. The audience restriction can be released by using the audience restriction releasing information. As an example, an input of a password can be cited.

3) The setting information recording section may have a recording device in card form. By using the recording device in card form, a portability of the setting information recording section can be improved. For example, the recording device in card form placed on a different display device is replaced on the other display device, and thereby the setting status can be transferred. As an example of the recording device in card form, an IC card can be cited.

(7) The display device lease management system may further include: an operation management server having an operation management section managing an operation of the display device, and which is connected to the display device so that they can communicate with each other. The operation management of the display device in addition to the managements of the lease of the display device and the provision of the contents can be performed effectively.

Here, the display device may further have: an operation status detecting section to detect an operation status of the display device; and an operation status transmission section to transmit the operation status detected at the operation status detecting section to the lease management server. The operation status of the display device can be notified to the operation management server immediately.

The operation status management server may further have: a maintenance check judgment section to judge whether a maintenance check of the display device is required or not based on the operation status transmitted from the display device; and a display section to display information identifying the display device which is judged as required to have the maintenance check by the maintenance check judgment section. By using the maintenance check judgment section and the display section to display the information identifying the display device which is judged as required to have the maintenance check by the maintenance check judgment section, the maintenance check (dispatch of maintenance people, or the like) can be performed immediately for the display device which is in a state requiring the maintenance check because of a trouble or the like.

B. In order to achieve the object stated above, a display device lease management method according to the present invention, which is a display device lease management method to manage a lease of a display device having a display section to display images and being an object of lease being capable to communicate with externals, includes: a lease management step to manage the lease of the display device; and a distribution management step to manage the distribution of contents to be displayed on the display section of the display device to the display device. By using a communication function of the display device, the lease management of the display device and the distribution management of the contents can be performed effectively.

(1) Here, the display device lease management method may further include: a request information input step to input request information for the display device or the contents by using the display device; a request transmission step to transmit the request information inputted at the request information input step from the display device; a request receiving step to receive the request information transmitted at the request information transmission step; and a request recording step to record the request information received at the request information receiving step. The transmission and recording of the request information for the display device or the contents inputted by using the input device of the display device can be performed immediately. As a result, the request of the user for the display device or the contents can be reflected immediately.

1) The request information input step may be performed by using a touch panel provided on the display section. A menu suitable for an input is displayed on the display device, and a selection from this menu is made by using the touch panel, and thereby the request information can be inputted easily.

2) The request information inputted at the request information input step is at least either contents specification information to specify the contents desired to be distributed to the display device, or contents characteristic information representing a characteristic of the contents desired to be distributed, and at least either the contents specification information or the contents characteristic information may be transmitted at the request information transmission step.

1) The distribution management step may have: a contents distribution step to distribute the contents corresponding to the contents specification information transmitted from the display device to the display device. When the contents specification information is transmitted from the display device, the contents can be distributed automatically to the display device at the contents distribution step.

2) The distribution management step may have: a list creating step to create a list of distributable contents to the display device based on the contents characteristic information transmitted from the display device; and a list transmission step to transmit the list created at the list creating step to the display device. When the contents characteristic information is transmitted from the display device, the list of the contents can be distributed automatically to the display device at the list distribution step.

Here, the distribution management step may further have: a selection information input step to input contents selection information by using the display device to select the contents desired to be distributed based on the list transmitted at the lease transmission step; and a selection transmission step to transmit the selection information inputted at the contents selection information input step. The user of the display device can select the desired contents from the distributed contents by using the selection information input section, and transmit it to the lease management server.

Further, the distribution management step may further have: a contents transmission step to distribute the contents corresponding to the contents selection information transmitted at the selection transmission step. The selected contents are distributed, and the user of the display device can view and listen to the contents.

(2) The distribution management step may have: a contents distribution step to distribute the contents to the display device; a contents receiving step in which the display device receives the contents distributed at the contents distribution step; and a contents recording step to record the contents received at the contents receiving step. The distributed contents are recorded, and therefore the user of the display device can view and listen to the contents at a desired time.

1) The distribution management step may further have: a contents erasing step to erase the contents recorded at the contents recording step. By erasing the contents, an effective utilization of a storage capacity to record the contents becomes possible. Besides, by restricting the audio-visual period and so on of the contents, the provision of the contents can be performed at a low price.

Here, the erasing of the contents at the contents erasing step may be performed based on erasing condition information distributed with the contents. This erasing condition information is, for example, an erasing timing of the contents.

(3) The distribution management step may have: a corresponding information input step to input corresponding information corresponding to the contents distributed to the display device; and a corresponding information transmission step to transmit the corresponding information inputted at the corresponding information input step. Information corresponding to the contents can be inputted and transmitted from the display device. As an example of "information corresponding to the contents", a golf swing, operational information on a game can be cited. Incidentally, it is permissible to perform this input from a plurality of display devices.

Here, the distribution management step may further have: a corresponding information processing step to process the contents corresponding information transmitted from the display device; a processed information transmission step to transmit processed information which is processed at the corresponding information processing step to the display device; and a displaying step in which the display device displays the processed information transmitted at the processed information transmission step. Information corresponding to the contents inputted from the display device is processed, and displayed on the display device. For example, it is possible to display information to correct the golf swing, and to change the screen in accordance with operational information on the game. Incidentally, inputs from a plurality of display devices can also be processed, and therefore, for example, a network game can be played.

(4) The lease management step may have: a lease payment recording step to record a payment status of a leasing bill of the display device; a payment execution judgment step to judge whether the payment of the leasing bill is executed or not based on the payment status of the leasing bill recorded at the lease payment recording step; a charging information transmission step to transmit payment charging information to charge a payment to the display device when it is judged that the payment is not executed at the payment execution judgment step; and a displaying step in which the display section of the display device displays the payment charging information transmitted at the charging information transmission step. When a payment of the lease is stacked up, it is possible to alert the user by using the leased display device. This leasing bill can be set variously, to be constant independent of an audio-visual time of the contents, to change in accordance with the distributed contents, or the like.

(5) As the contents, movies, paintings, landscapes, things, sports, games, and so on can be used. This game is a game making use of goods, and the goods are provided to the participants of the game in accordance with results of the game. As an example, a golf game in which a golf club is a prize thereof can be cited.

(6) The distribution management step may have: a setting information recording step to record setting information representing a setting status of the display device; and a setting step to set the display device based on the setting information recorded at the setting information recording step. The setting of the display device can be changed in accordance with the contents and so on.

1) The setting information recorded at the setting information recording step may be distributed together with the distribution of the contents. The setting information is distributed accompanying the distribution of the contents, and therefore, the setting of the display device corresponding to the contents can be made easily.

2) The setting information recorded at the setting information recording step may be audience restriction contents identification information to identify the contents of which the viewing and listening are to be restricted, and audience restriction releasing information to release the audience restriction of the contents represented by the audience restriction contents identification information. When some audience restriction is added to the distributed contents, the contents can be specified by using the audience restriction contents identification information, and thereby, the audience restriction can be performed.

The audience restriction mentioned here means to set the display device, and thereby, a whole or a part of the contents are made unable to view and listen. As concrete examples of the audience restriction contents, movies classified as R-rating or X-rating by Administration Commission of Motion Picture Code of Ethics, can be cited. The audience restriction can be released by using the audience restriction releasing information. As an example, an input of a password can be cited.

3) The setting information recording step may be performed by using a recording device in card form. By using a recording device in card form, a transfer of the setting status can be performed efficiently, such that the recording device in card form placed on a different display device is replaced on the other display device, and so on. As an example of the recording device in card form, an IC card can be cited.

(7) The display device lease management method may further include: an operation management step to manage an operation of the display device. The operation management of the display device in addition to the managements of the lease of the display device and the provision of the contents, can be performed efficiently.

Here, the operation management step may further have: an operation status detecting step to detect an operation status of the display device; and an operation status transmission step to transmit the operation status detected at the operation status detecting step. The operation status of the display device can be notified immediately.

Here, the operation management step may further have: a maintenance check judgment step to judge whether a maintenance check of the display device is required or not based on the operation status transmitted at the operation status transmission step; and a displaying step to display information identifying the display device which is judged as required to have the maintenance check at the maintenance check judgment step. By using the maintenance check judgment section and the display section to display the information identifying the display device which is judged as required to have the maintenance check by the maintenance check judgment section, the maintenance check (dispatch of maintenance people, or the like) can be performed immediately for the display device which is in a state requiring the maintenance check because of a trouble or the like.

C. In order to achieve the object stated above, a display device lease management server according to the present invention, includes: a contents data base to accumulate contents to be displayed on a display section of a display device having the display section to display images, and being an object of a lease which can communicate with externals; a lease management section to manage a lease of the display device and a distribution of the contents to the display device; and a communication section to communicate with the display device. The lease management section of the display device lease management server manages the lease of the display device and the distribution of the contents to the display device, and therefore, it becomes possible to manage both the lease of the display device and the provision of the contents to the display device efficiently.

### Brief Description of Drawings

FIG. 1 is a block diagram showing a structure of a display device lease management system according to an embodiment of the present invention.
FIG. 2 is a flow chart representing an overall operation of the display device lease management system.
FIG. 3 is a flow chart representing a procedure of a lease management of a display device.
FIG. 4 is a flow chart representing a procedure of an operation management of the display device.
FIG. 5 is a flow chart representing a procedure of a contents distribution management to the display device.

### Best Mode for Carrying out the Invention

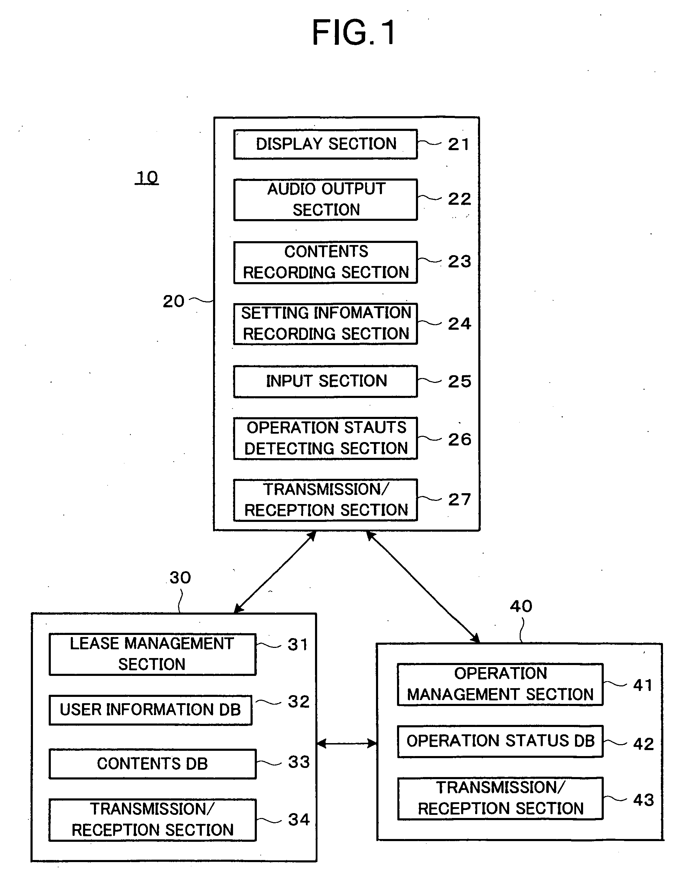

Hereinafter, an embodiment of the present invention will be described in detail with reference to the drawings. FIG. 1 is a block chart showing a structure of a display device lease management system 10 according to an embodiment of the present invention.

The display device lease management system 10 is a system to manage both a lease of a display device 20 and contents to be displayed on the display device 20. The display device lease management system 10 is composed of the display device 20, a lease management server 30 being a display device lease management server, and an operation management server 40, which can communicate with each other.

A user receiving a lease of the display device 20 can be either a personal user or a business user. The user can receive a provision of contents (displaying contents) displayed on the display device 20 together with the display device 20 from the lease management server 30.

As the business user, for example, an agency of a private projection room, an agency of a golf practice area, and an agency of karaoke can be cited. Incidentally, work contents of the agency of the private projection room and so on, will be described later.

As for the contents, both a static image and a moving image are acceptable, and it is permissible if sounds are contained accordingly. As concrete contents thereof, for example, movies, paintings, landscapes, things, sports, concerts (music, ballet, and so on), games (golf game, tennis game, quiz, and so on) can be cited.

In the golf game or the tennis game, goods such as a golf club and a tennis racket, and so on are used, and it is also conceivable that these goods are provided to participants of the game as prizes in accordance with results of the game.

### (Description of display device)

The display device 20 is an object of a lease, and it is composed of a display section 21, an audio output section 22, a contents recording section 23, a setting information recording section 24, an input section 25, an operation status detecting section 26, and a transmission/reception section 27. However, the display device 20 is not necessarily equipped with all of those sections, and they can be cut out accordingly.

The display device 20 can communicate with the lease management server 30 and the operation management server 40. The display device 20 can perform, for example, a transmission of a request for contents to the lease management server 30, a reception (distribution) of the contents from the lease management server 30, a transmission of an operation status of the display device 20 to the operation management server 40, a reception of maintenance check information (date of the next maintenance check, notice of details of the check, and so on) of the display device 20 from the operation management server 40, and so on.

Besides, it is possible to make a reservation of desired contents to be distributed, a setting of an audience inhibition and so on, on the display device 20. These settings are recorded on the setting information recording section 24. Incidentally, the distributed contents are recorded on the contents recording section 23, and the user can view and listen to the contents at a preferred time.

The user inputs request information in the input section 25, and thereby it is possible to make some request to the lease management server 30.

This request can be divided into the request for the content, and the request for the display device 20.

The request for the contents can be made by either 1) specifying the contents to be provided directly (indicating information to specify the contents, for example, some movie of some director), or 2) specifying the contents indirectly (indicating, for example, information representing characteristics of the contents, specifically, a private preference and so on such as a category of a movie, a preferred sports, musician, and so on).

As the request for the display device 20, requests for maintenance, an exchange, a specification change (model, size, number of pixels) and so on of the display device 20, can be cited. This request can be made by an indirect request form such as a request for a model change to the display device 20 having a design matched to the installation location.

As a result, it is possible that the model, the size, and the design of the display device 20 are semi custom-made (partially custom-made) according to a wish, an installation location, desired image quality, and so on, of a user. Namely, the user can easily request the display device 20 that matches to the self usage environment and preference both at a starting time of a lease and during a continuing lease of the display device 20.

The request for the display device 20 is conveyed to the operation management server 40 accordingly.

According to the request transmitted to the lease management server 30, the distribution of the contents from the lease management server 30, a dispatch of a manufacturer of the display device, and so on, are performed.

The display section 21 is to display the contents recorded on the contents recording section 23, and various display devices can be used. As the display device, for example, any of a CRT (Cathode Ray Tube), an LCD (Liquid Crystal Display), a PDP (Plasma Display Panel), a light-valve rear projection, a light-valve front projection, a luminescence display device, an LED array display device, an FED (Field Emission Display), or the like, can be used.

The audio output section 22 is an output device to output audio information relating to the contents, and for example, a speaker, a headphone, and so on can be cited.

The contents recording section 23 is to record the displaying contents (contents) transmitted from the lease management server 30 and displayed by the display section 21, and various recording devices can be used. The distributed contents are recorded on the contents recording section 23, and therefore, the user of the display device 20 can view and listen to the contents at a desired time.

This contents recording section 23 has a contents erasing section to erase the recorded contents automatically. By erasing the contents from the contents recording section23, a storage capacity of the contents recording section 23 can be utilized effectively. Further, by limiting an audio-visual period and so on of the contents, it becomes possible to provide the contents in low price. This automatic erasing by the contents erasing section from the contents recording section 23 can be performed, for example, based on erasing condition information distributed with the contents. The erasing condition information is, for example, an erasing timing of the contents.

As the recording device, for example, a semiconductor memory, a hard disk, a CD (Compact Disc), a DVD (Digital Versatile Disk), an MO disc (Magneto-Optical Disc), or the like can be used. However, the copy by a user is restricted from a point of view of a copyright of the contents.

The setting information recording section 24 is a recording device to record setting information (information representing the setting status) of the display device 20 corresponding to the contents to be displayed on the display section 21. As the setting information recording section 24, for example, an IC card can be used. The setting for the display device 20 is performed based on the setting information recorded on the setting information recording section 24. The setting can be performed by a display device setting section which is not shown.

Besides, by using a recording device in card form, a portability of the setting information recording section 24 can be improved. For example, the IC card placed on a different display device 20 is replaced on the other display device 20, and thereby the setting status can be transferred.

This setting information can be divided into information relating to a hardware and a software. As for the setting information relating to a hardware, for example, a model, a size, a number of pixels (for example, 1600 x 1200), a distinction of vertical placement/ horizontal placement, a status of an audio output section (a model (speaker, headphone, or the like), a size, an arrangement, and so on, of an output device to be connected), a status of the input section 25 (a type (microphone, television camera, or the like), an arrangement, and so on, of an input device to be connected) can be exemplified. Further, as for the setting information relating to a software, reservation setting information to reserve the contents to be viewed and listened on the display device 20, audience restriction information to restrict the viewing and listening thereof (for example, audience restriction level information representing a level of the contents to restrict the viewing and listening of under age people such as X-rating, R-rating, or the like, or/and audience restriction contents identification information to identify the contents of which the viewing and listening are to be restricted), and audience restriction releasing information to release the audience restriction can be exemplified. Here, the audience restriction means that a whole or a part of the contents are made unable to view and listen on the display device 20. As the audience restriction releasing information, for example, a password which is inputted and thereby the audience restriction is released, can be cited.

The setting information can be distributed attached to the contents. Setting information is distributed with the contents, and thereby the setting of the display device 20 corresponding to the contents can be performed easily.

The input section 25 is an input device enabling the input of information by a user of the display device 20. As the input section 25, for example, a touch panel formed on a surface of the display section 21, an image scanning device (television camera or the like) to input image information, an audio input device (microphone or the like) to input audio information can be used. This input section 25 functions as a request information input section, a selection information input section, and a corresponding information input section in the present invention.

The operation status detecting section 26 detects an operation status of the display section 21. As information of the operation status, for example, a presence/absence of an operation of the display section 21, a gradation characteristic (relation of luminance for an applied voltage) are conceivable. The detection of the operation status is performed by a display line, by each display pixel, or by plural pixels in block. The ageing and so on of the operation characteristics of, for example, a whole or a part of the display pixels or display lines of the display section 21 can be detected by the operation status detecting section 26. The detection of the operation status can be performed by detecting the luminance itself of each display pixel of the display section 21 directly (for example, a display image of the display section 21 is photographed by a television camera). Further, it is permissible that the detection of the operation status is performed by detecting the operation status of the display section 21 indirectly (for example, a detection of a current-voltage characteristic at the display section 21, and a measurement of a resistance value by each display line are performed). Such indirect techniques can also detect the change of the display status by each pixel, each line, and a whole screen of the display device 20.

The transmission/reception section 27 is a device to perform communications with the lease management server 30 and the operation management server 40. This communication can be performed by using various communication pathways such as a private line, a general line, and an Internet, and besides the communication may be either wired or wireless. The transmission/reception section 27 functions as a request information transmission section, a selection information transmission section, a corresponding information transmission section, and an operation status transmission section in the present invention.

### (Description of lease management server 30)

The lease management server 30 is a server to manage a lease of the display device 20 and a provision of contents, and it is composed of a lease management section 31, a user information data base (DB) 32, a contents DB 33, and a transmission/reception section 34.

A leasing agency of the display device 20 can use the lease management server 30. Both the lease of the display device 20 and the provision of the contents are managed one-dimensionally, and thereby the response to the user can be performed efficiently.

In addition to a periodical management of the lease of the display device 20, a management of a leasing bill is included in a lease management of the display device 20. Besides, requests of the user and so on are also managed as the request information. Namely, a user information desk and a leasing bill collection management can be unified by using the lease management server 30.

On the occasion of the provision of contents, it is possible to provide a list of already distributed or distributable contents, in addition to the distribution of the contents themselves in accordance with requests from the user. For example, when the user specifies the contents indirectly by using the contents characteristic information, a list of contents matching to the user's preference and so on can be provided.

The provided distributable list can be used when the user specifies concrete contents by using the input section 25 of the display device 20. The user selects the contents desired to be distributed from the distributable list by using the input section 25 (input of selection information), and thereby, a reservation of the distribution of the contents is accepted (automatic distribution reservation reception). The contents are distributed automatically based on the accepted distribution reservation.

In the lease management, a periodical management and a payment management of the leasing bill of the display device 20 are performed. For example, when the leasing bill is not paid by a user, a charging for payment is performed to the display device 20 via the transmission/reception section 34. Information of charging for payment (for example, information prompting the payment) is displayed on the display section 21 of the display device 20.

Incidentally, the leasing bill can be set constant independent of the audio-visual time of the contents. Further, the leasing bill can be set variously to change in accordance with the distributed contents, or the like.

The lease management section 31 performs both the lease management of the display device 20 and the provision management of the contents based on the user information DB 32.

The lease management section 31 functions as a list creating section creating the list of the distributable contents, a corresponding information processing section to process the contents corresponding information transmitted from the display device 20, and a payment execution judgment section to judge whether the payment of the leasing bill is executed or not, in the present invention.

The user information data base (DB) 32 is a data base to accumulate information relating to the user receiving the lease of the display device 20 and using the display devices 20. In the user information data base 32, lease management information to manage the lease of the display device 20, contents provision management information to manage the provision of the contents, and so on in addition to information to identify the user (a name or a company name, and an address, and so on of the user) are accumulated.

As lease management information, information to identify the display device 20 (model, size, accessories, and so on) leased to the user, a period of lease, a payment status of a leasing bill, and display device request information for the display device 20 from the user can be cited. That is to say, the user information DB 32 functions as a lease payment recording section recording the payment status of the leasing bill of the display device 20.

As the contents provision management information, provided contents identification information to identify the contents provided to the user, provision reservation contents identification information to identify the contents scheduled to be provided to the user, the request information of the contents from the user, and contents list information representing a list of contents corresponding to requests from the user, can be cited.

The contents DB 33 is a data base accumulating the contents themselves provided to the user and a contents table. As it is already described, the contents may be both static images and moving images, and it is permissible if voices are included accordingly. As it is already described, movies, paintings, landscapes, things, sports, concerts (music, ballet, and so on), games (golf game, tennis game, quiz, and so on), and so on, can be cited as concrete contents thereof.

The contents table is a table recording contents identification information to identify the contents accumulated on the contents DB 33 and indexes for extraction which enable the extraction of the contents in accordance with the user's request. Contents identification information may be any of characters, numerals, symbols, or combinations of those, as long as it is possible to identify the accumulated contents mutually.

The index for extraction represents the characteristic of the contents. The index for extraction contains types of the contents (movies, paintings, landscapes, things, dramas, ballet, sports (baseball, soccer, and so on), music, games, and so on), titles of the contents, fabricants of the contents (producer, director, conductor, composer, author, painter, and so on), phrases representing the details of the contents (tragedy, comedy, romance, warfare, and so on), performer (actor, dancer, ballerina, music performer, and so on), audience restriction information to restrict the viewing and listening of the contents (for example, audience restriction level information representing a level of the contents to restrict the viewing and listening of under age people such as X-rating or R-rating or/and audience restriction contents identification information to identify the contents of which the viewing and listening are to be restricted), and so on.

By searching this index it becomes possible to select the contents that match to a user's preference and request (namely, a creation of a list of the contents). Besides, by making use of this index, it becomes possible to restrict the viewing and listening of the contents by the user.

These contents are provided by a provider of contents creating and providing the contents. The provider of the contents provides the contents and receives the payment for the provision fee via the lease management server 30 of the leasing agency. Further, the provider of the contents can receive the provision of user information (user's preference and the contents which are desired to be provided by the user, extracted from the request of the user, and so on), recorded on the user information DB 32. That is to say, the provider of contents can provide the contents, obtain user information, and so on via the lease management server 30 without getting contact with the user directly.

The transmission/reception section 34 is a device to communicate with the display device 20 and the operation management server 40. This communication can be performed by using various communication pathways such as a private line, a general line, and an Internet, and besides the communication may be either wired or wireless.

The transmission/reception section 34 functions as a contents distribution section to distribute the contents, a list distribution section to distribute the created list, a processed information transmission section to transmit processed information, and a charging information transmission section to transmit payment charging information to charge the payment.

### (Description of the operation management server 40)

The operation management server 40 is a server to manage the operation status of the display device 20, and it is composed of an operation management section 41, an operation status data base (DB) 42, and a transmission/reception section 43.

A manufacturer of the display device 20 can use the operation management server 40. By using the operation management server 40, managements of a lease, a maintenance check, an exchange (change of model or the like), and so on, of the manufactured display device 20 can be performed efficiently.

The operation management section 41 can monitor an operation status of the display device 20 and the request information from the user and can issue a warning that it is necessary to perform a maintenance check or an exchange of the model as occasion demands by using the operation status DB 42. That is to say, the operation management section 41 functions as a maintenance check judgment section. Incidentally, the warning can be performed by using images, voices, and so on, accordingly.

The operation status DB 42 records information to identify the user, information to identify the leased display device 20, operation status information detected at the operation status detecting section 26 of the display device 20, maintenance information of the display device 20, the display device request information for the display device 20 obtained by the lease management server 30, and so on. As information to identify the user, for example, a name or a company name, and an address of the user can be cited. As information to identify the leased display device 20, for example, a model, a size, and accessories can be cited. As maintenance information of the display device 20, for example, a check interval, a content of check, a result of check, a presence/absence of a repair, a cause of a trouble, a response to the trouble can be cited.

The transmission/reception section 43 is a device to perform communications with the display device 20 and the lease management server 30. This communication can be performed by using various communication pathways such as a private line, a general line, and an Internet, and besides the communication may be either wired or wireless.

### (Operation of display device lease management system 10)

Subsequently, an operation of the display device lease management system 10 according to the present embodiment will be described with reference to the drawings.

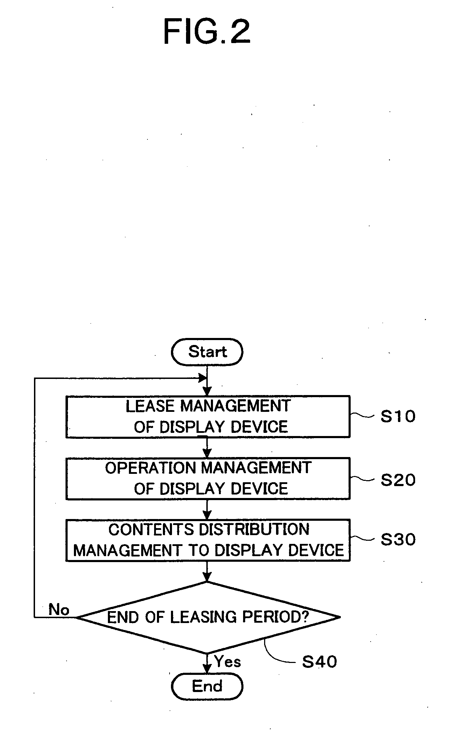

FIG. 2 is a flow chart representing an overall operation of the display device lease management system 10. As shown in the present drawing, a lease management of the display device 20 (Step S10), an operation management of the display device 20 (Step S20), and a contents distribution management to the display device 20 (Step S30), are performed until it comes to an end of a leasing period (Step S40).

Incidentally, the steps from S10 to S30 are designated to be performed sequentially in the present drawing, but actually, these steps are performed approximately in parallel. Further, these steps may be skipped accordingly in some cases.

Next, descriptions of the lease management of the display device 20, the operation management of the display device 20, and the contents distribution management to the display device 20 in these steps S10 to S30 will be described.

### A. Lease management of display device 20

The display device 20 is manufactured by a manufacturer, and is lent to a user via a leasing agency. The lease management of the display device 20 is performed by the lease management server 30 of the leasing agency.

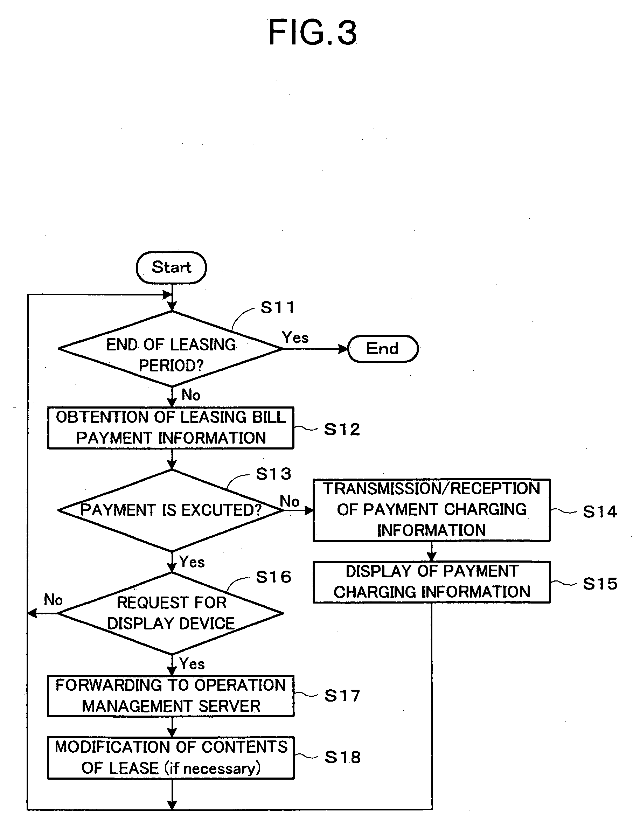

FIG. 3 is a flow chart representing a procedure of the lease management of the display device 20. Hereinafter, it is explained in sequence.
(1) When a leasing period is not finished (Step S11), leasing bill payment information is obtained by the lease management server 30 (Step S12).
   Specifically, a leasing period and a payment status of a user are recorded on the user information DB 32 of the lease management server 30.
   The user pays the leasing bill of the display device 20 to the leasing agency. This leasing bill contains a commission charge of the leasing agency and a lending fee of the display device 20 to the manufacturer, and this lending fee is transferred or the like to the manufacturer.
   Incidentally, the payment status of the leasing bill of the user can be recorded on the user information DB 32 by an automatic input (for example, an automatic monitoring of a transfer to a bank account in case of an online banking), or by a human input.
(2) The lease management section 31 of the lease management server 30 judges whether the user of the display device 20 executes the payment of the leasing bill or not based on information recorded on the user information DB 32 (Step S13).
   If the payment of the leasing bill is performed within the period, the payment of the leasing bill is executed, and if it is not performed, the payment of the leasing bill is not executed.
(3) When the payment of the leasing bill is not executed, payment charging information to charge the payment of the leasing bill is transmitted from the transmission/reception section 34 to the display device 20 by an instruction of the lease management section 31. Then, the transmission/reception section 27 of the display device 20 receives this payment charging information (Step S14).
   The display device 20 receiving the payment charging information displays this payment charging information on the display section 21 (Step S15). As a result, user's attention is roused.
   After that, the process returns to the step S11 and it is repeated again.
(4) Even when the payment for the leasing bill is executed, there is a case when some request for the display device 20 (for example, a request for exchange or repair of the display device 20) is transmitted from the display device 20 (Step S16).

In such a case, the details of the request are forwarded to the operation management server 40 (Step S17). The operation management server 40 records the forwarded details of the request to the operation status DB 42.

After that, a modification and so on of contents of a leasing contract is performed if necessary (Step S18).

The lease management server 30 can transmit information indicating that a leasing period is coming to an end, information asking for a presence/absence of a new lease, and so on, to the display device 20.

### B. Operation management of display device 20

This operation management of the display device 20 is basically performed by the operation management server 40 of a manufacturer.

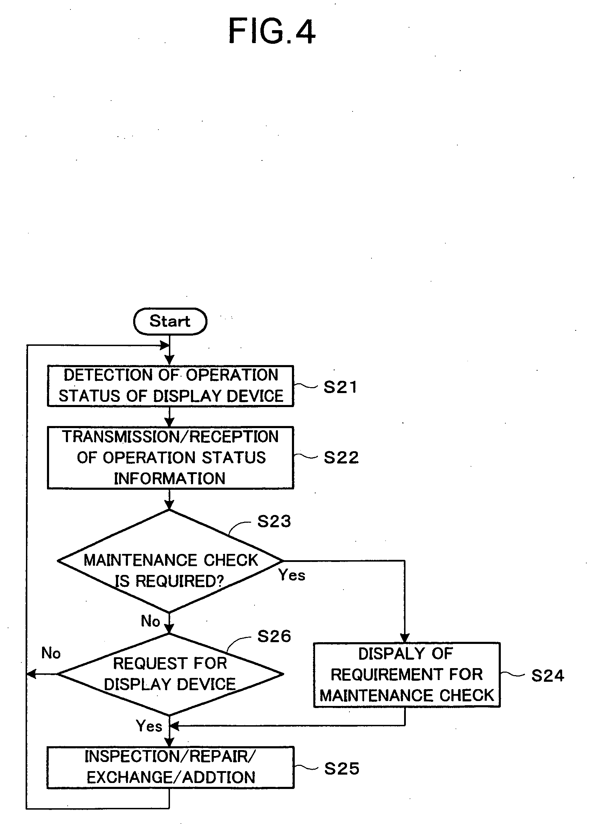

FIG.4 is a flow chart representing a procedure of the operation management of the display device 20. Hereinafter, it is explained sequentially.
(1) The operation status of the display device 20 is detected by the operation status detecting section 26 (Step S21), transmitted to the operation management server 40 via the transmission/reception section 27, and accumulated on the operation status DB 42 (Step S22).
(2) The operation management section 42 of the operation management server 40 judges whether a maintenance check of the display device 20 is necessary or not based on a record of the operation status DB 42 (Step S23).
   When the operation management section 42 judges that the maintenance check of the display device 20 is necessary, it performs a warning display or the like indicating that the check and the repair are required to the manufacturer (Step S24). The manufacturer confirms this warning, and then takes to the user and performs the check, repair, and so on, of the display device 20 (Step S25).
(3) There is a case when some request for the display device 20 (for example, a request for exchange or repair of the display device 20) is transmitted from the display device 20. This request is inputted in the input section 25, transmitted to the lease management server 30 via the transmission/reception section 27, accumulated on the user information DB 32 of the lease management server 30, and also, forwarded to the operation management server 40 via the transmission/reception section 34 (Step S26).

Request information forwarded to the operation management server 40 is accumulated on the operation status DB 42. The operation management server 40 performs the display and so on of the details of the request when it receives the request from the user. The manufacturer takes to the user and performs a setting change of the display device 20, the exchange of the display device 20, and so on, based on the displayed request (Step S26).

In addition to this, the operation management server 40 notifies a schedule of a regular inspection to the display device 20. This notification is displayed on the display section 21 of the display device 20.

At this time, the user inputs a presence/absence of inconveniences (presence/absence of acceptance) at the date and hour of the regular inspection by using the input section 25, and it can be transmitted to the operation management server 40 via the transmission/reception section 27.

The presence/absence of acceptance for the regular inspection transmitted from the display device 20 is recorded on the operation status DB 42 of the operation management server 40, and also it is displayed on the display device of the operation management server 40 and confirmed by the manufacturer.

As stated above, the manufacturer can provide the display device 20 to the user by means of a lease. As a result of this, for example, it becomes possible to make the display device 20 of a new type recognized by or spread to the user.

Besides, in association with the lease of the display device 20, a lending fee can be obtained. Further, through a request for the display device 20, information about the user's preference for the display device 20 can be obtained.

Meanwhile, the user can realize a good audio-visual environment by using a distinguished display device 20 (for example, with high-quality and large-sized screen) at relatively low expense by the lease.

Besides, the operation status of the display device 20 is continuously monitored by the operation management server 40, and therefore, it is not required to be troubled with the maintenance, the repair, the inspection of the display device 20.

Further, the user inputs a request for the display device 20 by the input section 25, and thereby the request is passed on to the operation management server 40 via the lease management server 30. The display device 20 is leased, and therefore the model exchange, the size change, or the like can be performed as needed without replacing the display device 20 by purchase.

### C. Contents distribution management to display device 20

Contents are transmitted (distributed) to the display device 20 and provided to the user, via the contents DB 33 and the transmission/reception section 34 of the lease management server 30 by a production and provision agency of the contents.

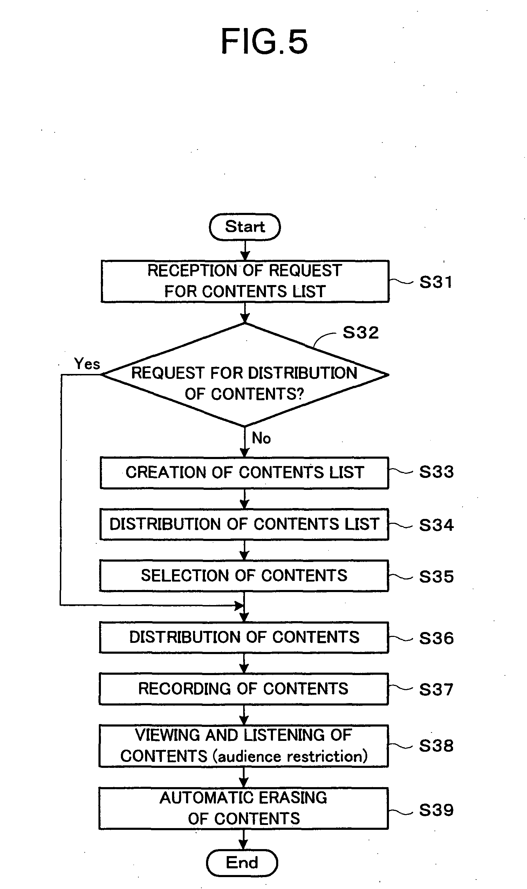

FIG. 5 is a flow chart representing a procedure of the contents distribution management to the display device 20. Hereinafter, it will be explained sequentially.
(1) The user inputs a request for the contents by using the input section 25, and then the request is received by the lease management server 30 (Step S31).
   The lease management section 31 judges whether the received request for the contents are the distribution request for the contents or the distribution request for the contents list (Step S32).
(2) When the user's request is the distribution request for the contents list, the list of the contents are created based on, for example, the contents characteristic information transmitted from the display device 20 together with this distribution request (Step S33).
   The created list is distributed to the display device 20 from the lease management server 30 (Step S34).
   Incidentally, it is possible to record a predetermined list on the contents DB 33, and transmit it automatically, regardless of a presence/absence of the request from the user.
(3) The distributed list is displayed on the display device 20. Then the user can reserve the distribution of the contents by inputting contents selection information selecting the desired contents to be distributed by using the input section 25 (Step S35). The inputted contents selection information is transmitted to the lease management server 30.
   Incidentally, information specifying the date and hour of the distribution can be included in distribution reservation information to be inputted if necessary.
(4) The lease management server 30 which receives the contents selection information, distributes the contents corresponding to this contents selection information to the display device 20 (Step S36).
   At this time, when some audience restriction is added to the contents, audience restriction contents identification information to identify the contents of which the viewing and listening are to be restricted, and audience restriction releasing information to release the audience restriction for the contents represented by the audience restriction contents identification information are distributed at the same time.
(5) The contents distributed to the display device 20 from the lease management server 30 are recorded on the contents recording section 23 (Step S37).
   Besides, when the audience restriction contents identification information and the audience restriction releasing information are distributed, these are recorded on the setting information recording section 24.
   Incidentally, a copying of the contents from the contents recording section 23 by a user is restricted. This restriction can be performed by using either a hardware or a software, or both of them.
(6) The user can view and listen to the contents recorded on the contents recording section 23 at a desired time (Step S38).
   At this time, it is confirmed whether the contents to be viewed and listened are the contents corresponding to audience restricted object specification information recorded on the setting information recording section 24 or not. Then, the contents being the audience restricted object becomes possible to view and listen when the audience restriction releasing information is inputted from the input section 25.
(7) When the period for recording the distributed contents on the contents recording section 23 is limited, the contents are deleted from the contents recording section 23 automatically after a predetermined period from the distribution goes on (Step S39).
   By doing this way, it becomes possible to limit the period when the user can view and listen to the contents. The contents of which the audio-visual period is thus limited become possible to be provided to the user at a low price to that extent. Besides, it becomes possible for the user to replace the tired contents to the other contents easily. Further, a recording capacity of the contents recording section 23 can be utilized effectively.
(8) When the user' s request at the step S32 is the distribution request of the contents, the contents are distributed based on, for example, contents specification information transmitted with this distribution request from the display device 20 (Step S34). The following process is the same as the case when the contents list is distributed, and the explanation thereof will not be given.

The user viewing and listening to the contents pays an audio-visual fee to the leasing agency. In the contents audio-visual fee paid by the user, both a commission charge of the leasing agency and a contents provision fee of a contents provider are contained. The contents provision fee is paid for the contents provider from among these.

Consequently, the contents provider can obtain general users leasing the display device 20, that is to say, a stable major customer by a contract with the leasing agency.

Besides, the contents provider provides the contents via the leasing agency, and thereby it is possible to avoid a problem of unpaid contents provision fee by the user. Further, the provided contents are recorded on the contents recording section 23 and the copy thereof by the user is restricted, and therefore it is possible to avoid a problem of an illegal copy of the contents by the user.

Further, information accumulated on the user information DB of the lease management server 30 is provided, and thereby it becomes possible to collect information of a preference and so on of end-users individually.

The user can make a request of the contents in accordance with his/her preferences (preferred musician or category of movie).

A list of distributable contents matching to this request is transmitted to the display device 20 from the lease management server 30, and the user can select the contents efficiently by using this list.

The contents selected by the user are distributed automatically from the lease management server 30 and recorded on the contents recording section 23 automatically, and therefore an oversight by the user does not occur.

Besides, the user is only required to pay the audio-visual fee corresponding to the contents viewed and listened, and therefore useless expenses can be avoided and it is economical.

Further, it becomes possible to receive the provision of the contents at a lower price because the contents are provided in the form that the audio-visual period thereof is restricted.

The display device 20 can be utilized in various modes corresponding to the distributed contents. For example, the display device 20 can be used as a back-ground video (BGV) of a store. When the display of the contents are performed for a long time as stated above, a low power consumption device, for example, SED is preferable to be used as the display device 20 from a point of view of cost.

### (Concrete examples of usage embodiments of display device 20)

Here, the cases when the display device 20 is used for business purposes other than private purposes will be explained. Here, utilization examples for a private projection room and a golf practice machine are described.

### A. Private projection room

A room where the display device 20 is used to appreciate various kinds of contents is called a private projection room. The display device 20 is placed at the private projection room and it is made possible for a user of the private projection room to select, view and listen to the contents. Besides, it may be admitted that the user takes in the contents.

An agency of the private projection room collects a usage fee of the private projection room in accordance with a usage time of the private projection room and an amount and details of the contents viewed and listened of the user.

The person receiving a lease of the display device 20 is the agency of the private projection room, and the agency of the private projection room pays a leasing bill and an audio-visual fee of the contents to a leasing agency from a part of the usage fee collected from the user.

In the private projection room, for example, friends or family can appreciate a large screen movie composedly. Further, the private projection room is redecorated in accordance with the contents, and thereby, it is possible to enjoy, for example, a sports game under an environment full of presence. Besides, the contents taken by a person (for example, images of an athletic festival of a child) can be projected on a screen.

### B. Golf practice machine

The display device 20 is placed at a golf practice area and can be used as a golf practice machine. A form of a user of the golf practice area is displayed on the display device 20, and thereby it is possible to check the form of self, receive an advice to correct the form, and so on.

The person receiving a lease of the display device 20 is an agency of the golf practice area, and the agency of the golf practice area pays a leasing bill and an audio-visual fee of the contents to a leasing agency from a part of an usage fee collected from the user of the golf practice machine.

The display section 21 is preferable to be placed, for example, vertically so as to be longer than is wide. It is because a whole body of the user can be efficiently displayed.

As contents thereof, the contents for check, correction, and so on of the form of the user can be used. Specifically, the following (1) to (4) become possible by selecting a menu displayed on the display device 20 by using the input section 25.
(1) An ideal form which serves as a useful reference for the user can be displayed. This form can be displayed in a state of repeat, slow motion, stop, and so on, if necessary, and thereby the user can check the ideal form.
(2) The user can check the form of self. A television camera is used as the input section 25 to perform this check, and a status the user swings a golf club actually is inputted. The inputted user' s form can be displayed in a state of repeat, slow motion, stop, and so on, if necessary, and thereby the user can check the self form.
(3) The user can receive an advice to correct the form. It is possible to perform this correction, for example, by pointing out the difference between the self form and the ideal form by images, sounds, and so on. For example, the self form and the ideal form are displayed at the same time, and a portion where a discrepancy is large can be indicated with an impressive color.
(4) Further, a video of a golf course is displayed on the display device 20, and thereby the user can enjoy a virtual play of golf. In this case, a direction where a ball is flying, a distance, a way of rolling after landing, and so on, can be reflected on the display section 21 in accordance with the form when the user swings the club.

In the cases shown in (3) and (4), it is required to change displaying contents of the display device 20 so as to correspond to the input of the user. Namely, some processes are performed on information inputted by the user.

Such a process on information can be performed by a software. The display device 20 transmits information inputted by the user to the lease management device 30. The lease management device 30 processes information inputted, and then transmits it back to the display device 20. The displaying contents of the display device 20 changes based on this processed information.

### Industrial Applicability

A display device lease management system, a display device lease management method, and a display device lease management server according to the present invention can efficiently manage both a lease of a display device and a provision of contents to be displayed on the display device, and they are industrially usable.

## Claims

1. A display device lease management system, comprising:
a display device having a display section to display images, and being an object of lease being capable to communicate with externals; and
a lease management server having a contents data base accumulating contents to be displayed on the display section of said display device and a lease management section managing a lease of said display device and a distribution of the contents to said display device, and connected to said display device so that they can communicate with each other.

2. The display device lease management system according to claim 1,
wherein said display device further has:
a request information input section to input request information for said display device or the contents; and
a request information transmission section to transmit the request information inputted at the request information input section to said lease management server, and
said lease management server further has:
a request information recording section to record the request information transmitted by the request information transmission section.

3. The display device lease management system according to claim 2,
wherein the request information input section includes a touch panel provided on the display section.

4. The display device lease management system according to claim 2,
wherein the request information inputted at the request information input section is at least either contents specification information specifying the contents desired to be distributed from said lease management server or contents characteristic information representing a characteristic of the contents desired to be distributed; and the request information transmission section transmits at least either the contents specification information or the contents characteristic information.

5. The display device lease management system according to claim 4,
wherein said lease management server further has:
a contents distribution section to distribute the contents accumulated on the contents data base to said display device based on the contents specification information transmitted from said display device.

6. The display device lease management system according to claim 4,
wherein said lease management server further has:
a list creating section creating a list of distributable contents to said display device, based on the contents characteristic information transmitted from said display device; and
a list distribution section distributing the list created by said list creating section to said display device.

7. The display device lease management system according to claim 6,
wherein said display device further has:
a selection information input section to input selection information selecting the contents desired to be distributed based on the list transmitted from said lease management server; and
a selection information transmission section to transmit the selection information inputted at the selection information input section to said lease management server.

8. The display device lease management system according to claim 7,
wherein said lease management server further has:
a contents distribution section to distribute the contents accumulated on the contents data base based on the contents selection information transmitted from said display device.

9. The display device lease management system according to claim 1,
wherein said display device has a contents recording section to record the distributed contents from the contents data base.

10. The display device lease management system according to claim 9,
wherein said display device has a contents erasing section to erase the contents recorded on the contents recording section.

11. The display device lease management system according to claim 10,
wherein the contents erasing section erases the contents recorded on the contents recording section based on erasing condition information distributed with the contents.

12. The display device lease management system according to claim 1,
wherein said display device further has:
a corresponding information input section to input contents corresponding information corresponding to the contents; and
a corresponding information transmission section to transmit the corresponding information inputted at the corresponding information input section to said lease management server.

13. The display device lease management system according to claim 12,
wherein said lease management server further has:
a corresponding information processing section to process the contents corresponding information transmitted from said display device; and
a processed information transmission section to transmit processed information which is processed at the corresponding information processing section to said display device, and
wherein said display device displays the processed information transmitted from said lease management server.

14. The display device lease management system according to claim 1,
wherein said lease management server further has:
a lease payment recording section in which a payment status of a leasing bill of said display device is recorded;
a payment execution judgment section judging whether the payment of the leasing bill is executed or not based on the payment status of the leasing bill recorded on the lease payment recording section; and
a charging information transmission section to transmit, to said display device, payment charging information to charge the payment when it is judged by the payment execution judgment section that the payment is not executed, and
wherein said display device displays the payment charging information transmitted from said lease management server on the display section.

15. The display device lease management system according to claim 14,
wherein the leasing bill is constant, independent of an audio-visual time of the contents.

16. The display device lease management system according to claim 14,
wherein the leasing bill changes corresponding to the distributed contents.

17. The display device lease management system according to claim 1,
wherein the contents include at least any of movies, paintings, landscapes, things, sports, and games.

18. The display device lease management system according to claim 17,
wherein the game is a game making use of goods, and the goods are provided to participants of the game in accordance with results of the game.

19. The display device lease management system according to claim 1,
wherein said display device further has:
a setting information recording section to record setting information representing a setting status of said display device; and
a display device setting section to perform a setting of said display device based on the setting information recorded on the setting information recording section.

20. The display device lease management system according to claim 19,
wherein the setting information recorded on the setting information recording section is distributed together with the distribution of the contents.

21. The display device lease management system according to claim 19,
wherein the setting information recorded on the setting information recording section is audience restriction contents identification information to identify the contents of which the viewing and listening are to be restricted, and audience restriction releasing information to release the audience restriction of the contents represented by the audience restriction contents identification information.

22. The display device lease management system according to claim 19,
wherein the setting information recording section has a recording device in card form.

23. The display device lease management system according to claim 1, further comprising:
an operation management server having an operation management section managing an operation of said display device, and which is connected to said display device so that they can communicate with each other.

24. The display device lease management system according to claim 23,
wherein said display device further has:
an operation status detecting section to detect an operation status of said display device; and
an operation status transmission section to transmit the operation status detected at the operation status detecting section to said lease management server.

25. The display device lease management system according to claim 24,
wherein said operation status management server further has:
a maintenance check judgment section to judge whether a maintenance check of said display device is required or not based on the operation status transmitted from said display device; and
a display section to display information identifying said display device which is judged as required to have the maintenance check by the maintenance check judgment section.

26. A display device lease management method, which is a display device lease management method to manage a lease of a display device having a display section to display images and being an object of lease being capable to communicate with externals, comprising:
a lease management step to manage the lease of the display device; and
a distribution management step to manage a distribution of contents to be displayed on the display section of the display device to the display device.

27. The display device lease management method according to claim 26, further comprising:
a request information input step to input request information for the display device or the contents by using the display device;
a request transmission step to transmit the request information inputted at said request information input step from the display device;
a request receiving step to receive the request information transmitted at said request information transmission step; and
a request recording step to record the request information received at said request information receiving step.

28. The display device lease management method according to claim 27, wherein said request information input step is performed by using a touch panel provided on the display section.

29. The display device lease management method according to claim 27,
wherein the request information inputted at said request information input step is at least either contents specification information to specify the contents desired to be distributed to the display device, or contents characteristic information representing a characteristic of the contents desired to be distributed, and
at least either the contents specification information or the contents characteristic information is transmitted at said request transmission step.

30. The display device lease management method according to claim 29,
wherein said distribution management step has:
a contents distribution step to distribute the contents corresponding to the contents specification information transmitted from the display device to the display device.

31. The display device lease management method according to claim 29,
wherein said distribution management step has:
a list creating step to create a list of distributable contents to the display device based on the contents characteristic information transmitted from the display device; and
a list transmission step to transmit the list created at the list creating step to the display device.

32. The display device lease management method according to claim 31,
wherein said distribution management step further has:
a selection information input step to input contents selection information to select the contents desired to be distributed based on the list transmitted at the lease transmission step; and
a selection transmission step to transmit the selection information inputted at the contents selection information input step.

33. The display device lease management method according to claim 32,
wherein said distribution management step further has:
a contents transmission step to distribute the contents corresponding to the contents selection information transmitted at the selection transmission step.

34. The display device lease management method according to claim 26,
wherein said distribution management step has:
a contents distribution step to distribute the contents to the display device;
a contents receiving step in which the display device receives the contents distributed at the contents distribution step; and
a contents recording step to record the contents received at the contents receiving step.

35. The display device lease management method according to claim 34,
wherein said distribution management step further has:
a contents erasing step to erase the contents recorded at the contents recording step.

36. The display device lease management method according to claim 35, wherein the erasing of the contents at the contents erasing step is performed based on erasing condition information distributed with the contents.

37. The display device lease management method according to claim 26,
wherein said distribution management step has:
a corresponding information input step to input corresponding information corresponding to the contents distributed to the display device; and
a corresponding information transmission step to transmit the corresponding information inputted at the corresponding information input step.

38. The display device lease management method according to claim 37,
wherein said distribution management step further has:
a corresponding information processing step to process the contents corresponding information transmitted from the display device;
a processed information transmission step to transmit processed information which is processed at the corresponding information processing step to the display device; and
a displaying step in which the display device displays the processed information transmitted at the processed information transmission step.

39. The display device lease management method according to claim 26,
wherein said lease management step has:
a lease payment recording step to record a payment status of a leasing bill of the display device;
a payment execution judgment step to judge whether the payment of the leasing bill is executed or not based on the payment status of the leasing bill recorded at the lease payment recording step;
a charging information transmission step to transmit payment charging information to charge a payment to the display device when it is judged that the payment is not executed at the payment execution judgment step; and
a displaying step in which the display section of the display device displays the payment charging information transmitted at the charging information transmission step.

40. The display device lease management method according to claim 39, wherein the leasing bill is constant independent of an audio-visual time of the contents.

41. The display device lease management method according to claim 39, wherein the leasing bill changes corresponding to the distributed contents.

42. The display device lease management method according to claim 26, wherein the contents include at least any of movies, paintings, landscapes, things, sports, and games.

43. The display device lease management method according to claim 42, wherein the game is a game making use of goods, and the goods are provided to participants of the game in accordance with results of the game.

44. The display device lease management method according to claim 26,
wherein said distribution management step has:
a setting information recording step to record setting information representing a setting status of the display device; and
a setting step to set the display device based on the setting information recorded at the setting information recording step.

45. The display device lease management method according to claim 44, wherein the setting information recorded at the setting information recording step is distributed together with the distribution of the contents.

46. The display device lease management method according to claim 45,
wherein the setting information recorded at the setting information recording step is audience restriction contents identification information to identify the contents of which the viewing and listening are to be restricted, and audience restriction releasing information to release the audience restriction of the contents represented by the audience restriction contents identification information.

47. The display device lease management method according to claim 45,
wherein the setting information recording step is performed by using a recording device in card form.

48. The display device lease management method according to claim 26, further comprising:
an operation management step to manage an operation of the display device.

49. The display device lease management method according to claim 48,
wherein said operation management step further has:
an operation status detecting step to detect an operation status of the display device; and
an operation status transmission step to transmit the operation status detected at the operation status detecting step.

50. The display device lease management method according to claim 49,
wherein said operation management step further has:
a maintenance check judgment step to judge whether a maintenance check of the display device is required or not based on the operation status transmitted at the operation status transmission step; and
a displaying step to display information identifying the display device which is judged as required to have the maintenance check at the maintenance check judgment step.

51. A display device lease management server, comprising:
a contents data base to accumulate contents to be displayed on a display section of a display device having the display section to display images, and being an object of a lease which can communicate with externals;
a lease management section to manage a lease of the display device and a distribution of the contents to the display device; and
a communication section to communicate with the display device.
